(19) **Europäisches Patentamt**

**European Patent Office**

**Office européen des brevets**

(11) Veröffentlichungsnummer: **0 189 510**
**B1**

(12) # EUROPÄISCHE PATENTSCHRIFT

(45) Veröffentlichungstag der Patentschrift:
22.06.88

(21) Anmeldenummer: **85105104.5**

(22) Anmeldetag: **26.04.85**

(51) Int. Cl.⁴: **F 16 F 13/00**, B 60 K 5/12,
**F 16 F 7/10**

(54) **Motorlager.**

(30) Priorität: **15.01.85 DE 3501112**

(43) Veröffentlichungstag der Anmeldung:
**06.08.86 Patentblatt 86/32**

(45) Bekanntmachung des Hinweises auf die Patenterteilung:
**22.06.88 Patentblatt 88/25**

(84) Benannte Vertragsstaaten:
**DE FR GB IT**

(56) Entgegenhaltungen:
**EP - A - 0 040 327**
**EP - A - 0 058 408**
**EP - A - 0 115 417**
**EP - A - 0 129 780**
**DE - A - 2 807 160**
**FR - A - 2 431 639**
**GB - A - 2 158 182**

(73) Patentinhaber: **Firma Carl Freudenberg, Höhnerweg 4,
D-6940 Weinheim/Bergstrasse (DE)**

(72) Erfinder: **Sciortino, Giacomo, Schröderstrasse 1,
D-6900 Heidelberg 1 (DE)**

(74) Vertreter: **Weissenfeld-Richters, Helga, Dr.,
Höhnerweg 2, D-6940 Weinheim/Bergstrasse (DE)**

## Beschreibung

Die Erfindung betrifft ein Motorlager mit hydraulischer Dämpfung enthaltend einen durch ein Auflager, eine Tragfeder und eine Trennwand begrenzten Arbeitsraum und einen durch die Trennwand und eine nachgiebige Pufferwand begrenzten Ausgleichsraum die durch eine Drosselöffnung verbunden und mit einer Flüssigkeit gefüllt sind sowie eine in der Trennwand angeordnete, gasgefüllte Kammer, die gegenüber dem Arbeitsraum durch eine kreisförmig begrenzte, an einer elastischen Ringmembran aufgehängte, Scheibe abgeschlossen ist.

Auf ein Motorlager der vorgenannten Art nimmt die europäische Patentanmeldung 0 115 417 bezug. Es zeichnet sich bei Einleitung hochfrequenter Schwingungen durch eine gute Isolierwirkung aus sowie durch eine gute Dämpfungswirkung bei Einleitung niederfrequenter Schwingungen von weniger als 30 hz. Werden indessen beide Schwingungsarten in gemischter Form eingeleitet, beispielsweise beim Überfahren von Bodenunebenheiten mit hoher Motordrehzahl, dann ergibt sich eine erhebliche Beeinträchtigung der Isolierwirkung. Die Erfindung setzt an dieser Stelle an. Ihr liegt die Aufgabe zugrunde, ein Motorlager der eingangs genannten Art derart weiterzuentwickeln, dass sich bei Einleitung von Schwingungen, die sowohl solche eines niederfrequenten Spektrums als auch solche eines hochfrequenten Spektrums umfassen, neben einer guten Dämpfung der tieffrequenten Schwingungen eine gute Isolierwirkung der hochfrequenten Schwingungen ergibt. Diese Aufgabe wird erfindungsgemäss bei einem Motorlager der eingangs genannten Art dadurch gelöst, dass die Scheibe aus einem Kettenschwinger besteht, derart, dass sie radial ineinander liegend wenigstens zwei aufeinander folgende Tilgermassen umfasst, die durch eine Ringmembran elastisch aneinander festgelegt sind. Auf vorteilhafte Ausgestaltungen nehmen die Unteransprüche bezug.

Die Funktion des erfindungsgemäss vorgeschlagenen Motorlagers dürfte darauf beruhen, dass sich die zu einem Kettenschwinger zusammengeschlossenen einzelnen Tilgermassen in ihrer Beweglichkeit gegenseitig beeinflussen, wobei die Tilgermassen in ihrer Gesamtheit auf dem Gasdruckpolster abgestützt sind, das in der Kammer enthalten ist. Ihre elastische Aufhängung erfährt dadurch in Abhängigkeit von den eingeleiteten Kräften eine stetige Veränderung. Eine gute Kompensation hochfrequenter Schwingungen ist hiervon die Folge, wobei es von entscheidendem Vorteil ist, dass sich diese vorteilhafte Wirkung auch dann einstellt, wenn gleichzeitig niederfrequente Schwingungen in das Motorlager eingeleitet werden.

In Hinblick auf die Auslegung des vorgeschlagenen Motorlagers für die Abstützung üblicher KFZ-Motoren hat es sich als vorteilhaft erwiesen, wenn das Verhältnis aus den insgesamt vorhandenen Tilgermassen und der anteiligen Masse des Motors max. 0.1 beträgt und das Verhältnis aus der Steifigkeit einer jeden Ringmembrane und der Steifigkeit der Tragfeder max. 1,0. Es ist zu berücksichtigen, dass bei einer Variation eines der beiden Parameter stets auch der andere Parameter im gleichen Richtungssinne verändert werden muss. Die Grobabstimmung kann dabei aufgrund theoretischer Berechnungen erfolgen, wozu es einer weiteren Erläuterung an dieser Stelle nicht bedarf. Die Feinabstimmung ist der praktischen Erprobung des mit dem vorgeschlagenen Motorlager ausgestatteten KFZ 's unter normalen Betriebsbedingungen vorbehalten.

Eine weitere Verbesserung der Wirksamkeit lässt sich erzielen, wenn das Verhältnis aus der hydraulisch wirksamen Kolbenfläche des an der Tragfeder festgelegten Traglagers und der entsprechenden hydraulisch wirksamen Fläche einer jeden Tilgermasse in dem Bereich zwischen 1 und 16 liegt, vorteilhaft in dem Bereich zwischen 2 und 8. Die erstgenannte Kolbenfläche umfasst etwa 2/3 derjenigen Fläche, die sich ergibt, wenn man die Unterseite des Traglagers und der Tragfeder auf eine sich quer zu ihrer Bewegungsrichtung erstreckende Fläche projiziert. Die letztgenannte Fläche umfasst die entsprechend projizierte Abbildung einer jeden Tilgermasse, vergrössert um 50% der in gleicher Weise projizierten Fläche der anschliessenden Ringmembrane.

Sämtliche bei dem erfindungsgemäss vorgeschlagenen Motorlager zur Anwendung gelangenden Ringmembranen sind so ausgebildet, dass sie ohne nennenswerte Dämpfungsarbeit verformbar sind. Die angesprochene Tilgerwirkung kommt hierdurch besonders deutlich zum Tragen. Die zur Anwendung gelangenden Tilgermassen haben in bezug auf eine Verwendung des vorgeschlagenen Motorlagers an einem KFZ Motor ein Gewicht von 10 - 200 g, bei PKW-Motoren zumeist von 10 - 50 g. Eine von der absoluten Kreisform abweichende Gestaltung der Tilgermassen und der zugehörigen Ringmembranen ist möglich. Oval oder polygonförmig begrenzte Ausführungen können dadurch mit in die Überlegungen einbezogen werden.

Der Gegenstand der Erfindung wird nachfolgend anhand der in der Anlage beigefügten Zeichnung weiter verdeutlicht. Es zeigen:

Fig. 1 eine beispielhafte Ausführung des erfindungsgemäss vorgeschlagenen Motorlagers in längsgeschnittener Darstellung.

Fig. 2 eine der in Fig. 1 zur Anwendung gelangenden Ringmembranen in halbgeschnittener Darstellung.

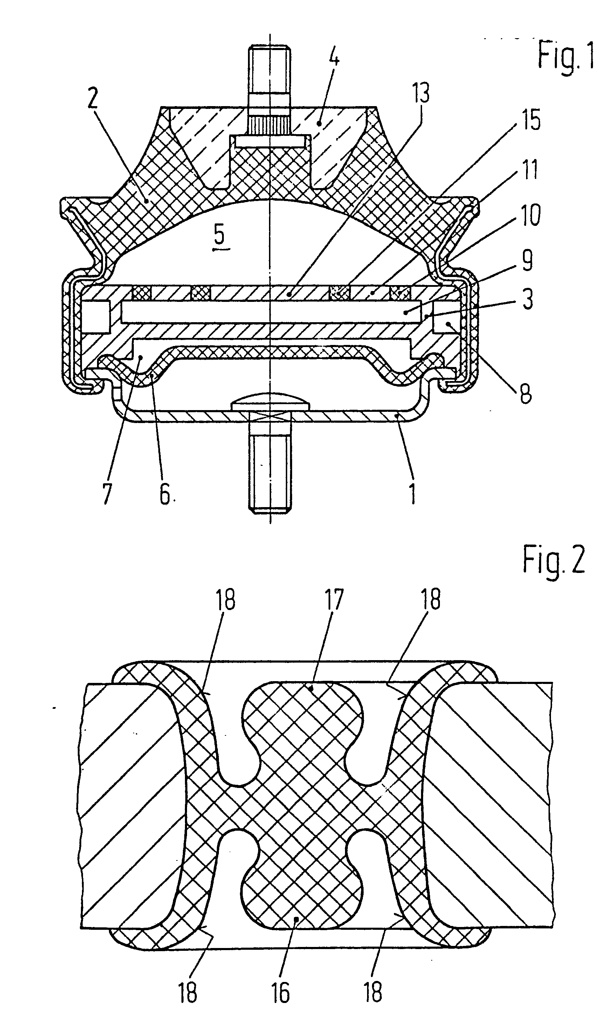

Das in Fig. 1 gezeigte Motorlager umfasst das Auflager 1 und das Traglager 4, die durch die hohlkegelig ausgebildete Tragfeder 2 verbunden sind.

Das Auflager 1 ist tassenförmig ausgebildet und schliesst an die Unterseite der Trennwand 3 an, gegen welche es durch den randseitigen Wulst der aus elastischem Material bestehenden Pufferwand 6 abgedichtet ist. Die Pufferwand 6 und die Unterseite der Trennwand 3 umschliessen gemeinsam den Ausgleichsraum 7. Der Arbeitsraum 5 wird im wesentlichen durch das Traglager 4, die Tragfeder 2 und die Trennwand 3 begrenzt. Er ist mit dem Ausgleichsraum 7 durch die Drosselöffnung 8 verbunden und ebenso wie dieser mit einer Flüssigkeit gefüllt, im allgemeinen mit Wasser, dem ein Frostschutzmittel zugesetzt ist. Der Raum zwischen der Pufferwand 6 und dem Auflager 1 ist entlüftet. In diesem Raum kann sich dadurch bei einer Verformung der Pufferwand 6 ein Druck nicht aufbauen.

DieTrennwand 3 enthält eine gasgefüllte Kammer. Der Druck ist einstellbar und kann oberhalb oder unterhalb des atmosphärischen Druckes liegen.

Die Kammer ist gegenüber dem Arbeitsraum 5 durch die Scheiben 11, 13 abgegrenzt sowie durch die die Scheiben kettenähnlich untereinander und mit der Trennwand verbindenden Ringmembranen 10, 15. Letzere haben elastische Eigenschaften und die Scheiben erfahren dadurch eine Verschiebung, wenn sich der Druck im Arbeitsraum ändert. Sie beeinflussen sich dabei in Abhängigkeit von ihrer Masse, der Elastizität der Ringmembranen und der Frequenz der eingeleiteten Schwingungen gegenseitig.

Fig. 2 die in Fig. 1 zur Anwendung gelangenden Ringmembranen in einer halbgeschnittenen Darstellung. Das Profil ist im wesentlichen dadurch gekennzeichnet, dass die Ringmembranen auf den einander gegenüberliegenden Seiten zueinander spiegelbildlich zugeordnete, axiale Ringvorsprünge 16, 17 aufweisen und dass den radialen Begrenzungsflächen der Ringvorsprünge Anschlagsflächen 18 weitere Ringvorsprünge in einem Abstand zugeordnet sind, die einander und den Ringvorsprüngen 16, 17 spiegelbildlich zugeordnet sind. Die axiale Verschiebbarkeit der durch die Ringmembranen gehaltenen Scheiben ist dadurch auf ein bestimmtes Mass begrenzt, dessen Wert durch die gegenseitige Berührung zwischen der Anschlagsfläche 18 und dem jeweils gegenüberliegenden Ringvorsprung 16, 17 gekennzeichnet ist. Die gegenseitige Berührung ist durch die Rundung vollkommen geräuschlos, was von grossem Vorteil ist in Hinblick auf den erwünschten Fahrkomfort.

## Patentansprüche

1. Motorlager mit hydraulischer Dämpfung, enthaltend einen durch ein Auflager (4), eine Tragfeder (2) und eine Trennwand (3) begrenzten Arbeitsraum (5) und einen durch die Trennwand (3) und eine nachgiebige Pufferwand (6) begrenzten Ausgleichsraum (7), die durch eine Drosselöffnung (8), verbunden und mit einer Flüssigkeit gefüllt sind sowie eine in der Trennwand (3) angeordnete, gasgefüllte Kammer (9), die gegenüber dem Arbeitsraum (5) durch eine kreisförmig begrenzte, an einer elastischen Ringmembran (10) aufgehängte, Scheibe (11, 13, 15) abgeschlossen ist, dadurch gekennzeichnet, dass die Scheibe aus einem Kettenschwinger besteht, derart, dass sie, radial ineinander liegend, wenigstens zwei aufeinander folgende Tilgermassen (11, 13) umfasst, die durch eine Ringmembran (15) elastisch aneinander festgelegt sind.

2. Motorlager nach Anspruch 1, dadurch gekennzeichnet, dass die Tilgermassen insgesamt ein Gewicht von 10 - 200 g haben.

3. Motorlager nach Anspruch 1 oder 2, dadurch gekennzeichnet, dass die Ringmembranen (10, 15) zwei einander spielgelbildlich zugeordnete axiale Ringvorsprünge (16, 17) aufweisen und dass den radialen Begrenzungsflächen der Ringvorsprünge (16, 17) Anschläge (18) in einem Abstand zugeordnet sind, die einander und den Ringvorsprüngen spiegelbildlich zugeordnet sind.

## Claims

1. An engine mounting having hydraulic damping, containing a working space (5), which is bounded by a support (4), a bearing spring (2) and a partition (3), and containing a compensating space (7), which is bounded by the partition (3) and a flexible buffer wall (6), said spaces being joined by a throttle opening (8) and filled with a liquid, as well as containing a gas-filled chamber (9), which is arranged in the partition (3) and is closed off from the working space (5) by a disc (11, 13, 15) which is circular in shape and is suspended on a flexible annular membrane (10), characterized in that the disc is composed of a linked oscillator in such a way that it comprises at least two successive absorber masses (11, 13), lying radially one in the other, which are fixed to each other flexibly by an annular membrane (15).

2. An engine mounting according to claim 1, characterized in that the absorber masses in total have a weight of 10 - 200 g.

3. An engine mounting according to claim 1 or 2, characterized in that the annular membranes (10, 15) have two axial annular projections (16, 17), which are arranged in a mirror image fashion to each other, and that the radial boundary surfaces of the annular projections (16, 17) are associated with stops (18) at a distance away from them, which stops are arranged in a mirror image fashion to each other and to the annular projections.

## Revendications

1. Support de moteur avec amortissement hydraulique, ce support comportant un compartiment de travail (5) délimité par un appui (4), par un ressort porteur (2) et par une paroi de séparation (3), ainsi qu'un compartiment de compensation (7) délimité par la paroi de séparation (3) et par une paroi tampon flexible (6), ces compartiments étant reliés par une ouverture d'étranglement (8), tandis qu'ils sont remplis d'un liquide, ainsi qu'une chambre (9) remplie de gaz et disposée dans la paroi de séparation (3), cette chambre étant fermée vis-à-vis du compartiment de travail (5) par un disque (11, 13, 15) délimité circulairement et suspendu à une membrane annulaire élastique (10), caractérisé en ce que ce disque est constitué d'un oscillateur à chaîne comportant au moins deux masses d'amoritissement (11, 13) disposées radialement l'une dans l'autre, se succédant et fixées élastiquement l'une à l'autre au moyen d'une membrane annulaire (15).

2. Support de moteur selon la revendication 1, caractérisé en ce que, ensemble, les masses d'armortissement pèsent 10 - 200 g.

3. Support de moteur selon la revendication 1 ou 2, caractérisé en ce que les membranes annulaires (10, 15) comportent deux saillies annulaires axiales (16, 17) attribuées l'une à l'autre de manière spéculaire, tandis qu'aux surfaces de délimitation radiales des saillies annulaires (16, 17) et à l'écart de ces surfaces, sont attribuées des butées (18), lesquelles sont attribuées l'une à l'autre et aux saillies annulaires de manière spéculaire.

Fig. 1

Fig. 2